# FASCICULE DE BREVET EUROPEEN

(11) **EP 3 216 663 B1**
(45) Date de publication et mention de la délivrance du brevet: **22.08.2018**
(21) Numéro de dépôt: 17159997.0
(22) Date de dépôt: 09.03.2017
(51) Int. Cl.: B60S 3/00, B08B 3/02, B08B 7/00, B24C 1/00

(54) **INSTALLATION DE NETTOYAGE DE VÉHICULES ROULANTS**
REINIGUNGSANLAGE VON ROLLFAHRZEUGEN
CLEANING FACILITY OF ROLLING VEHICLES

(30) Priorité: 09.03.2016 FR 1651968
(43) Date de publication de la demande: 13.09.2017
(73) Titulaire: ALSTOM Transport Technologies, 93400 Saint-Ouen (FR)
(72) Inventeur: PEREIRA, Jorge, 64200 BIARRITZ (FR)
(74) Mandataire: Lavoix

(56) Documents cités:
- WO-A1-2014/161518
- KR-A- 20120 108 671
- KR-A- 20130 121 589

## Description

L'invention concerne une installation de nettoyage de véhicules roulants, notamment de véhicules ferroviaires.

Pour nettoyer les véhicules ferroviaires de diverses salissures, il est connu de les faire circuler dans des corridors de nettoyage dans lesquels un nettoyage à base de jets de liquide haute pression est opéré pour détacher les particules salissantes des surfaces du véhicule. Il est notamment connu de US-A-2006/0060217 de projeter des jets à haute vitesse et haute pression de neige obtenue à partir d'air compressé ou d'azote liquide mélangée à de l'eau refroidie. Toutefois, l'utilisation d'eau pour le nettoyage présente divers problèmes tels que la consommation d'eau, qui peut être problématique dans certains pays, la nécessité d'un circuit de circulation d'eau et sa complexité, et le risque de formation de rouille sur les véhicules nettoyés.

Il est également connu de KR-A-10 1278799 de nettoyer les organes de roulage en partie basse d'un véhicule ferroviaire par la projection à haute vitesse et haute pression d'un jet de glace sèche obtenue à partir de dioxyde de carbone permettant de décoller les particules de salissures puis de les évacuer à l'aide d'un jet d'air à haute pression. Il est également connu de DE-A-1 99 43 832 de nettoyer l'intérieur d'un véhicule ferroviaire ayant subi un incendie par la projection de glace sèche obtenue à partir de dioxyde de carbone. Cependant l'usage de dioxyde de carbone implique un risque d'explosion en espace fermé, et est toxique pour les personnes pouvant se trouver à proximité du véhicule nettoyé. La vapeur ou le gaz peut s'accumuler en concentration importantes et dangereuses notamment à proximité du sol, le gaz étant plus lourd que l'air, et surtout dans les espaces fermés, si la ventilation n'est pas adaptée. KR-A-20130121589 montre le préambule de la revendication 1. C'est à ces inconvénients qu'entend remédier l'invention en proposant une nouvelle installation de nettoyage de véhicule roulant, dans laquelle les risques liés à l'utilisation de dioxyde de carbone sont mieux maîtrisés et les risques d'accident sont réduits.

A cet effet, l'invention concerne une installation de nettoyage de véhicules roulants, notamment de véhicules ferroviaires, comprenant un réservoir de stockage de dioxyde de carbone à l'état liquide, un compresseur-sécheur d'air, une machine de fabrication de glace carbonique alimentée par le réservoir et par le compresseur-sécheur, un corridor de nettoyage dans lequel les véhicules roulants sont introduits, et des dispositifs de projection de glace carbonique sur les véhicules roulants. Cette installation est caractérisée en ce qu'elle comprend en outre un système de contrôle de l'atmosphère du corridor de nettoyage, incluant un détecteur de dioxyde de carbone dans le corridor, un système d'aspiration de dioxyde de carbone et un système de ventilation, le système d'aspiration de dioxyde de carbone et le système de ventilation étant adaptés pour être contrôlés en fonction de la quantité de dioxyde de carbone mesurée dans le corridor par le détecteur de dioxyde de carbone.

Grâce à l'invention, le taux de dioxyde de carbone dans l'atmosphère du corridor de nettoyage est surveillé et contrôlé en permanence, ce qui permet de réduire considérablement les risques d'explosion ou d'intoxication.

Selon des aspects avantageux mais non obligatoires de l'invention, une telle installation peut incorporer une ou plusieurs des caractéristiques suivantes, prises selon toute combinaison techniquement admissible :
- L'installation comprend un détecteur adapté pour détecter l'entrée d'un véhicule roulant dans le corridor de nettoyage et déclencher automatiquement les dispositifs de projection de glace carbonique.
- La machine de fabrication de glace carbonique est un pelletiseur.
- La glace carbonique est fabriquée sous forme de granules, de neige, de pellets ou de bâtonnets.
- Les dispositifs de projection de glace carbonique comprennent des jets à buses multiples disposés sur deux côtés opposés du corridor.
- Le corridor comprend un chemin de fer adapté pour guider des véhicules roulants ferroviaires dans le corridor.

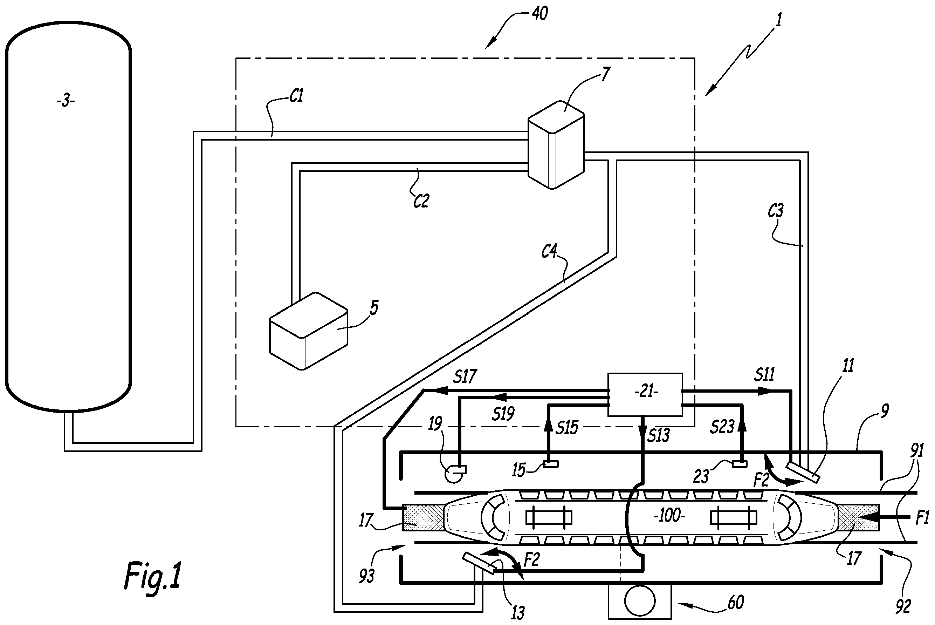

L'invention sera mieux comprise et d'autres avantages de celle-ci apparaîtront plus clairement à la lumière de la description qui va suivre, d'une installation de nettoyage dite « au défilé » ou « stop & go » de véhicules roulants, faite à titre d'exemple non limitatif en référence à la figure 1 annexée représentant une vue schématique d'une installation de nettoyage conforme à l'invention au cours du nettoyage d'un véhicule roulant.

La figure 1 représente une installation 1 de nettoyage « au défilé » de véhicules roulants, plus particulièrement adapté au nettoyage de véhicules ferroviaires. L'installation 1 comprend un corridor de nettoyage 9, dans lequel les véhicules roulants sont introduits. L'installation 1 utilise le principe de la projection de glace sèche sur les véhicules pour détacher les salissures et les évacuer. La glace sèche est obtenue à partir de dioxyde de carbone, ce qui permet d'éviter l'utilisation d'eau et de réduire l'impact environnemental du nettoyage.

L'installation 1 comprend à cet effet un réservoir 3 de stockage de dioxyde de carbone à l'état liquide et un compresseur sécheur d'air 5. Le réservoir 3 est implanté à l'extérieur du corridor de nettoyage 9 et est posé sur une dalle spécifique renforcée. Le réservoir 3 stocke le dioxyde de carbone liquide à une température adaptée pour minimiser l'évaporation de celui-ci, par exemple de l'ordre de 86°C. A proximité du réservoir 3, une autre dalle dédiée au dépotage, accepte des charges d'au moins 26 tonnes pour le ravitaillement par camion en dioxyde de carbone liquide. Le compresseur-sécheur d'air 5 est alimenté en air ambiant par une entrée d'air non représentée. En variante, l'air peut être comprimé puis séché, ou vice versa, dans deux équipements distincts.

Le réservoir 3 et le compresseur sécheur 5 sont tous deux reliés par des conduites C1 et C2, les plus courtes possibles et recouvertes de gaine isolante, à une machine de fabrication de glace carbonique 7. A partir du dioxyde de carbone à l'état liquide et de l'air comprimé et séché produit par le compresseur sécheur 5, la machine 7 fabrique de la glace carbonique qui constitue une glace sèche dans la mesure où elle ne contient pas d'eau, qui est ensuite acheminée vers le corridor de nettoyage 9.

La machine 7 de fabrication de glace carbonique est de préférence un pelletiseur. Avantageusement, la glace carbonique est fabriquée sous forme de granules, de neige, de pellets ou de bâtonnets.

Un véhicule roulant 100 est représenté dans le corridor de nettoyage 9. Le véhicule roulant 100, qui est un véhicule ferroviaire, est introduit dans le corridor 9 selon une direction représentée par la flèche F1 et est supporté par deux rails 91 traversant le corridor de nettoyage 9.

Le corridor de nettoyage 9 forme un espace clos dont les seules ouvertures 92 et 93 sont ménagées à ses extrémités pour permettre l'entrée et la sortie du véhicule roulant 100. Les ouvertures 92 et 93 sont, par exemple, munies de portes commandées automatiquement et alimentées électriquement à partir de cellules photo-électriques. Ainsi, les ouvertures 92 et 93 peuvent être obturées pendant le nettoyage d'un véhicule roulant 100 pour fermer le corridor de nettoyage 9 et afin d'éviter la dispersion du dioxyde de carbone et de salissures aux alentours.

Le corridor de nettoyage 9 comprend des dispositifs, avantageusement rotatifs autour d'un axe vertical, comme cela est représenté par les doubles flèches F2, de projection de glace carbonique sur le véhicule roulant 100. Ces dispositifs de projection sont formés dans cet exemple par deux jets à buses multiples 11 et 13 disposés sur deux côtés opposés du corridor 9, chacun à une extrémité du corridor de nettoyage 9. Dans cet exemple, les jets 11 et 13 sont disposés de chaque côté des rails 91, et alimentés respectivement en glace carbonique par des conduites C3 et C4 dans lesquelles la glace carbonique circule à partir de la machine 7. Les conduites C3 et C4 sont dimensionnées pour être les plus courtes possibles et recouvertes de gaine isolante.

En variante non représentée, les jets à buses multiples 11 et 13 peuvent être disposés sur deux côtés opposés du corridor 9, en regard l'un de l'autre à l'une de ses extrémités, par exemple près de l'ouverture 92.

La fonction de nettoyage des surfaces extérieures du véhicule roulant 100 est essentiellement assurée en trois temps, par exemple, dans le cas de figure où la glace carbonique est fabriquée sous forme de pellets :
- Projection des pellets à une température très basse, par exemple de l'ordre de -78°C, ce qui provoque un choc thermique qui a pour effet de rétracter les salissures,
- Impact et liquéfaction des pellets, les salissures se détachant,
- Sublimation des pellets et effet de souffle, les salissures se décollant.

Le dioxyde de carbone s'avère dangereux voire mortel pour les humains à partir d'une certaine valeur de concentration dans l'air. La valeur limite d'exposition à ne pas dépasser est de 3 % en taux de concentration dans l'air sur une durée maximale d'un quart d'heure. Conformément à l'invention, afin de réduire les risques liés à la projection de dioxyde de carbone dans le corridor 9, l'installation 1 comprend un système de contrôle de l'atmosphère du corridor de nettoyage 9, comprenant un détecteur 15 de dioxyde de carbone, adapté pour mesurer la quantité de dioxyde de carbone présente dans le corridor 9. Le système de contrôle 15 est de préférence installé sur un plafond du corridor 9. Avantageusement, le détecteur 15 mesure la concentration en dioxyde de carbone dans l'air ambiant du corridor 9. En variante, le détecteur de dioxyde de carbone peut être adapté pour mesurer tout autre type de paramètre représentatif de la quantité de dioxyde de carbone présente dans le corridor 9.

Le système de contrôle comprend également un système d'aspiration de dioxyde de carbone 17.

Le système d'aspiration de dioxyde de carbone 17 est, par exemple, formé entre les rails 91 à partir d'une réservation centrale ou collecteur courant le long du corridor 9 et recouvert de caillebottis sur toute sa longueur. La fonction principale du système d'aspiration 17 est de collecter les salissures issues du nettoyage du véhicule roulant 100 et aussi d'aspirer le dioxyde de carbone émis par la projection de glace carbonique. Le système d'aspiration de dioxyde de carbone 17 est relié par des réservations dans le béton à un système 60 de filtrage, d'extraction et d'évacuation à une hauteur règlementaire et conforme du dioxyde de carbone.

Le système de contrôle comprend également un système de ventilation 19 adapté pour insuffler de l'air neuf dans le corridor 9. Le système de ventilation 19 est de préférence installé sur un plafond du corridor 9.

Le système d'aspiration 17 et le système de ventilation 19 sont adaptés pour être contrôlés en fonction de la quantité de dioxyde de carbone mesurée dans le corridor 9 par le détecteur 15. L'installation 1 comprend à cet effet des moyens électroniques de contrôle 21. Les moyens de contrôle 21 peuvent être par exemple formés par une unité électronique de contrôle. Sur la base de la mesure de quantité de dioxyde de carbone effectuée par le détecteur 15, qui peut être par exemple transmise par le détecteur 15 à l'unité 21 sous la forme d'un signal électrique S15, l'unité 21 détermine si la valeur détectée dépasse une valeur seuil à partir de laquelle les risques d'explosion ou d'intoxication augmentent. En fonction de cette détermination, l'unité 21 déclenche l'aspiration du dioxyde de carbone contenu dans l'atmosphère du corridor 9 par le système d'aspiration 17, et l'insufflation d'air neuf dans le corridor 19 par le système de ventilation 19. Ainsi, la quantité de dioxyde de carbone présente dans l'atmosphère du corridor 9 est réduite.

L'unité électronique 21 peut par exemple communiquer avec le système d'aspiration 17 et avec le système de ventilation 19 par des signaux électriques respectifs S17 et S19.

Selon un aspect optionnel de l'invention, l'installation 1 comprend un détecteur 23 d'entrée d'un véhicule roulant dans le corridor 9 adapté pour transmettre à l'unité 21 un signal S23. Le détecteur 23 peut être un détecteur à laser ou à cellules photoélectriques couplées à un récepteur balise. Sur la base de ce signal, l'unité 21 enclenche automatiquement la procédure de nettoyage et transmet aux jets 11 et 13 des signaux électriques S11 et S13 permettant d'enclencher la projection de glace carbonique.

Avantageusement, l'installation 1 comprend un local technique 40 adjacent au corridor 9. Le local technique 40 comprend à minima les moyens électroniques de contrôle 21, le compresseur sécheur d'air 5, la machine 7 de fabrication de glace carbonique et une partie des conduites C1, C2, C3 et C4. En variante non représentée, le local technique 40 peut également englober le réservoir 3 de stockage de dioxyde de carbone à l'état liquide.

De manière générale, l'invention permet d'éviter l'utilisation d'eau, ce qui est avantageux pour les pays dans lesquels l'accès à l'eau est limité. Cela permet également d'éviter la construction d'un réseau de distribution d'eau et de réduire le coût de l'installation. La non-utilisation d'eau permet également d'éviter la création d'eaux usées à retraiter. Le nettoyage n'implique pas de produits chimiques, le dioxyde de carbone étant une molécule présente naturellement dans l'atmosphère, ce qui est avantageux pour les pays pratiquant une politique environnementale rigoureuse. Le non-usage d'eau et de produits chimiques évite également le risque de rouille sur les véhicules roulants, et produit un nettoyage de meilleure qualité. L'invention permet également de simplifier l'installation par rapport aux installations de l'art antérieur, ne nécessite pas un coût d'entretien et de fabrication important. L'invention n'implique notamment pas d'éléments mécaniques de nettoyage tels que des brosses entrant en contact avec le matériel roulant, ce qui simplifie sa conception. L'invention ne dégrade pas d'un point de vue global le bilan carbone au niveau industriel puisque le dioxyde de carbone liquide acheté en tant que matière première pour cette installation est destiné à être rejeté dans l'air. A un endroit différent, dans un processus industriel distinct, le dioxyde de carbone produit a été séquestré, liquéfié et vendu pour être utilisé et rejeté ailleurs.

L'invention s'applique à tous type de véhicules ferroviaires, tels que les véhicules à roues fer ou à roues pneumatiques, tels que les trains, les métros, les tramways.

Selon un mode de réalisation non représenté, l'invention s'applique également à tous autres types de véhicules roulants, tels que les véhicules de transports de marchandise ou de transport collectif de personnes.

## Revendications

1. Installation (1) de nettoyage de véhicules roulants (100), notamment de véhicules ferroviaires, comprenant :
- un réservoir (3) de stockage de dioxyde de carbone à l'état liquide,
- un compresseur-sécheur d'air (5),
- une machine (7) de fabrication de glace carbonique alimentée par le réservoir (3) et par le compresseur-sécheur (5),
- un corridor de nettoyage (9) dans lequel les véhicules roulants (100) sont introduits, et
- des dispositifs (11, 13) de projection de glace carbonique sur les véhicules roulants (100),
**caractérisée en ce qu'**elle comprend en outre un système de contrôle (15, 17, 19, 21) de l'atmosphère du corridor de nettoyage (9), incluant un détecteur (15) de dioxyde de carbone dans le corridor (9), un système d'aspiration (17) de dioxyde de carbone et un système de ventilation (19), le système d'aspiration de dioxyde de carbone (17) et le système de ventilation (19) étant adaptés pour être contrôlés en fonction de la quantité de dioxyde de carbone mesurée (S15) dans le corridor (9) par le détecteur (15) de dioxyde de carbone.

2. Installation selon la revendication 1, **caractérisée en ce qu'**elle comprend un détecteur (23) adapté pour détecter l'entrée d'un véhicule roulant (100) dans le corridor (9) de nettoyage et déclencher automatiquement (S11, S13) les dispositifs de projection (11, 13) de glace carbonique.

3. Installation selon l'une des revendications précédentes, **caractérisée en ce que** la machine de fabrication de glace carbonique est un pelletiseur (7).

4. Installation selon l'une des revendications précédentes, **caractérisée en ce que** la glace carbonique est fabriquée sous forme de granules, de neige, de pellets ou de bâtonnets.

5. Installation selon l'une des revendications précédentes, **caractérisée en ce que** les dispositifs de projection de glace carbonique comprennent des jets à buses multiples (11, 13) disposés sur deux côtés opposés du corridor (9).

6. Installation selon l'une des revendications précédentes, **caractérisée en ce que** le corridor (9) comprend un chemin de fer (91) adapté pour guider des véhicules roulants ferroviaires (100) dans le corridor (9).

## Patentansprüche

1. Einrichtung (1) zum Reinigen von fahrenden Fahrzeugen (100), insbesondere von Schienenfahrzeugen, aufweisend:
- einen Behälter (3) zum Speichern von Kohlenstoffdioxid in flüssigem Zustand,
- einen Luft-Kompressor-Trockner (5),
- eine Maschine (7) zum Herstellen von Trockeneis, die durch den Behälter (3) und durch den Luft-Kompressor-Trockner (5) gespeist wird,
- einen Reinigungskorridor (9), in den die fahrenden Fahrzeuge (100) eingeführt werden, und
- Vorrichtungen (11, 13) zum Schleudern von Trockeneis auf die fahrenden Fahrzeuge (100),
**dadurch gekennzeichnet, dass** sie ferner ein System zum Steuern (15, 17, 19, 21) der Atmosphäre des Reinigungskorridors (9) aufweist, aufweisend einen Detektor (15) für Kohlenstoffdioxid in dem Korridor (9), ein System zum Ansaugen (17) von Kohlenstoffdioxid und ein Lüftungssystem (19), wobei das System zum Ansaugen von Kohlenstoffdioxid (17) und das Lüftungssystem (19) angepasst sind, um in Abhängigkeit von der gemessenen Menge an Kohlenstoffdioxid (S15) in dem Korridor (9) durch den Detektor (15) für Kohlenstoffdioxid gesteuert zu werden.

2. Einrichtung gemäß Anspruch 1, **dadurch gekennzeichnet, dass** sie einen Detektor (23) aufweist, der angepasst ist, um das Eintreten eines fahrenden Fahrzeugs (100) in den Reinigungskorridor (9) zu detektieren und die Vorrichtungen zum Schleudern (11, 13) von Trockeneis automatisch auszulösen (S11, S13).

3. Einrichtung gemäß einem der vorhergehenden Ansprüche, **dadurch gekennzeichnet, dass** die Maschine zum Herstellen von Trockeneis eine Pelletiervorrichtung (7) ist.

4. Einrichtung gemäß einem der vorhergehenden Ansprüche, **dadurch gekennzeichnet, dass** das Trockeneis in Form von Körnchen, Schnee, Pellets oder Stäbchen hergestellt ist.

5. Einrichtung gemäß einem der vorhergehenden Ansprüche, **dadurch gekennzeichnet, dass** die Vorrichtungen zum Schleudern von Trockeneis Mehrfachdüsenstrahlen (11, 13) aufweisen, die auf zwei gegenüberliegenden Seiten des Korridors (9) angeordnet sind.

6. Einrichtung gemäß einem der vorhergehenden Ansprüche, **dadurch gekennzeichnet, dass** der Korridor (9) eine Eisenbahnschiene (91) aufweist, die angepasst ist, um fahrende Schienenfahrzeuge (100) in dem Korridor (9) zu führen.

## Claims

1. A facility (1) for cleaning rolling vehicles (100), in particular railway vehicles, comprising:
- a reservoir (3) for storing liquid carbon dioxide,
- an air compressor-dryer (5),
- a machine (7) for manufacturing dry ice supplied by the reservoir (3) and the compressor-dryer (5),
- a cleaning corridor (9) in which the rolling vehicles (100) are introduced, and
- devices (11, 13) for spraying dry ice on the rolling vehicles (100),
**characterized in that** it further comprises a system (15, 17, 19, 21) for checking the atmosphere of the cleaning corridor (9), including a carbon dioxide detector (15) in the corridor (9), a carbon dioxide aspirating system (17) and a ventilation system (19), the carbon dioxide aspirating system (17) and the ventilation system (19) being suitable for being controlled based on the quantity of carbon dioxide measured (S15) in the corridor (9) by the carbon dioxide detector (15).

2. The facility according to claim 1, **characterized in that** it comprises a detector (23) suitable for detecting the entry of a rolling vehicle (100) into the cleaning corridor (9) and automatically triggering (S11, S13) the dry ice spraying devices (11, 13).

3. The facility according to one of the preceding claims, **characterized in that** the dry ice manufacturing machine is a pelletizer (7).

4. The facility according to one of the preceding claims, **characterized in that** the dry ice is manufactured in the form of granules, snow, pellets or sticks.

5. The facility according to one of the preceding claims, **characterized in that** the devices for spraying dry ice comprise jets with multiple nozzles (11, 13) arranged on two opposite sides of the corridor (9).

6. The facility according to one of the preceding claims, **characterized in that** the corridor (9) comprises a railroad track (91) suitable for guiding rolling railway vehicles (100) in the corridor (9).
